# FASCICULE DE BREVET EUROPEEN

(11) **EP 4 197 867 B1**
(45) Date de publication et mention de la délivrance du brevet: **13.03.2024**
(21) Numéro de dépôt: 22213690.5
(22) Date de dépôt: 15.12.2022
(51) Int. Cl.: B60T 13/66, B60T 17/22

(54) **VÉHICULE FERROVIAIRE ET MÉTHODE DE REMORQUAGE ASSOCIÉE**
SCHIENENFAHRZEUG UND ENTSPRECHENDES ABSCHLEPPVERFAHREN
RAILWAY VEHICLE AND TOWING METHOD THEREFOR

(30) Priorité: 17.12.2021 FR 2113840
(43) Date de publication de la demande: 21.06.2023
(73) Titulaire: ALSTOM Holdings, 93400 Saint-Ouen-sur-Seine (FR)
(72) Inventeur: FUMAROLA, Francesco, 92100 BOULOGNE-BILLANCOURT (FR)
(74) Mandataire: Lavoix

(56) Documents cités:
- EP-A2- 0 950 594
- CN-A- 107 235 041
- CN-B- 109 878 489

## Description

La présente invention concerne un véhicule ferroviaire du type comprenant :
- un système d'alimentation électrique ;
- une conduite principale d'air comprimé présentant une pression principale ;
- une unité de production d'air comprimé, propre à générer de l'air comprimé à partir d'une alimentation électrique fournie par le système d'alimentation électrique, l'unité de production étant propre à alimenter en air comprimé la conduite principale ;
- une conduite générale de freinage d'air comprimé présentant une pression générale ;
- un système de contrôle de pression générale propre à alimenter en air comprimé la conduite générale à partir de l'air comprimé de la conduite principale ;
- au moins un système de commande du freinage du véhicule ferroviaire propre à déclencher automatiquement le freinage en fonction de la pression générale de la conduite générale, le système de commande du freinage comprenant :
   * un réservoir de freinage d'air comprimé, le réservoir de freinage étant alimenté en air comprimé par la conduite principale,
   * un frein pneumatique, le frein pneumatique étant propre à être alimenté par une pression de freinage fournie par le réservoir de freinage, et propre à exercer une force de freinage du véhicule en fonction de la pression de freinage alimentée ;
   * un système de distribution propre à autoriser automatiquement l'alimentation en pression du ou de chaque frein pneumatique depuis le réservoir de freinage, en fonction de la pression générale de la conduite générale.

En cas de problème, notamment d'alimentation électrique, un tel véhicule peut se retrouver dans un état de défaillance. Le véhicule est alors secouru par un autre véhicule, dit de secours, qui est aussi du type précité.

L'état de défaillance du véhicule secouru implique par exemple que :
- le système de contrôle et de gestion TCMS (en anglais « Train Control and management System ») du véhicule secouru est défaillant, et aucune surveillance active de l'état des fonctions de freinage du véhicule secouru n'est mise en oeuvre ; et/ou
- aucune alimentation de moyenne tension n'est disponible à bord du véhicule secouru, le système d'alimentation électrique du véhicule secouru étant par exemple en panne, de sorte que l'unité de production d'air comprimé n'est plus en mesure d'alimenter en pression la conduite principale du véhicule secouru.

Lors de cette opération de secours, les conduites principales MRP des deux véhicules sont connectées l'une à l'autre et les conduites générales de freinage BP des deux véhicules sont aussi connectées l'une à l'autre, ces connexions étant mises en oeuvre par un dispositif d'interface dédié. Cette connexion permet en temps normal le maintien en pression de la conduite principale MRP et de la conduite générale de freinage BP du véhicule secouru grâce, respectivement, à celles du véhicule de secours.

Cependant, des problèmes d'alimentation en pression de la conduite principale MRP ou de la conduite générale BP du véhicule secouru, par le véhicule de secours, peuvent survenir, malgré cette connexion par le dispositif d'interface dédié.

En particulier, une interruption (sans fuite d'air) de la continuité entre la conduite principale MRP du véhicule de secours et celle du véhicule secouru (par exemple par fermeture d'un robinet, ou obstruction de la conduite) pourrait rester non détectée par le conducteur du véhicule de secours. Dans un tel cas, la pression dans la conduite principale MRP, et donc dans chaque réservoir de freinage BR, du véhicule secouru pourrait se vider, suite à des freinages successifs, jusqu'à ce qu'il ne reste pas assez d'air pour réaliser un freinage par le véhicule secouru.

Une telle situation présente un risque élevé d'accident pour l'ensemble du véhicule secouru et du véhicule de secours.

Il est donc nécessaire de s'assurer que le véhicule secouru soit en capacité de freiner, par exemple suite à une commande par le véhicule de secours, ou que le conducteur du véhicule secouru soit informé, et/ou qu'une action se produise (exemple : commander un freinage d'urgence) si cette capacité de freiner n'est plus assurée.

Pour ce faire, il est déjà connu de fournir une première solution permettant le remplissage de chaque réservoir de freinage d'air du véhicule secouru à partir de l'air comprimé de la conduite générale de freinage du véhicule secouru. Chaque réservoir de freinage du véhicule secouru est alors alimenté à la fois par la conduite principale MRP et par la conduite générale de freinage BP du véhicule secouru.

Cependant, cette première solution n'est pas satisfaisante.

En effet, cette première solution nécessite d'être installée au niveau de chaque réservoir de freinage. En outre, cette solution pourrait ne pas être disponible sur certains véhicules ferroviaires déjà en exploitation.

Il est aussi connu une deuxième solution dans laquelle la conduite principale du véhicule secouru est connectée pneumatiquement à la conduite générale de freinage du véhicule secouru par l'intermédiaire d'une conduite, d'un robinet d'isolement et d'un clapet anti-retour autorisant l'alimentation en pression de la conduite principale par la conduite générale de freinage.

Cependant, cette deuxième solution n'est pas satisfaisante.

En effet, cette deuxième solution n'est pas conforme aux normes EN 14198 et EN 16185-1, imposant pour contrainte que l'air comprimé des réservoirs du système de freinage et de la conduite générale de freinage ne soit utilisé pour aucun autre but que le freinage. L'air comprimé de la conduite générale de freinage alimente alors la conduite principale et peut être utilisée à d'autres fins que le freinage.

CN 107 235 041 A divulgue un véhicule ferroviaire comprenant un système d'alimentation électrique, le véhicule ferroviaire étant dans un état de défaillance, et une méthode de remorquage d'un véhicule ferroviaire remorqué par un autre véhicule ferroviaire remorqueur, le véhicule remorqué étant dans un état de défaillance.

Un but de l'invention est de fournir une solution simple permettant d'éviter que le véhicule secouru se retrouve dans une situation d'incapacité à freiner.

De plus, en complément, il serait aussi souhaitable que la solution soit conforme aux normes EN 14198 et EN 16185-1.

A cet effet, l'invention concerne un véhicule du type précité, caractérisé en ce que le véhicule ferroviaire comprend en outre un système de contrôle pneumatique de la pression principale de la conduite principale, le système de contrôle pneumatique étant propre à comparer automatiquement la pression principale de la conduite principale avec au moins la pression générale de la conduite générale, et étant propre à évacuer automatiquement l'air comprimé de la conduite générale hors de la conduite générale, lorsque la pression principale de la conduite principale passe en-dessous d'un seuil principal de pression d'urgence.

Ainsi, le problème d'éviter que le véhicule remorqué se retrouve dans une situation d'incapacité à freiner est résolu non pas en assurant que les réservoirs de freinage sont toujours remplis, comme dans le cas des première et deuxième solutions, mais en contrôlant la pression principale de la conduite principale, dans la mesure où ce sera la pression la plus faible qui puisse être présent dans chaque réservoir de freinage.

Le véhicule selon l'invention peut comprendre l'une ou plusieurs des caractéristiques suivantes, prise(s) isolément ou suivant toute combinaison techniquement possible :
- le véhicule comprend une pluralité de systèmes de commande du freinage et le seuil principal de pression d'urgence est supérieur ou égal à la pression minimale pour mettre en oeuvre un freinage par l'ensemble des freins pneumatiques du véhicule ;
- lequel le système de contrôle pneumatique de la pression principale comprend au moins un distributeur comparateur, le distributeur comparateur étant un distributeur pneumatique à commande pneumatique avec rappel élastique, le distributeur comparateur présentant au moins une entrée d'alimentation pneumatique connectée à la conduite générale et au moins une sortie d'échappement pneumatique raccordée à l'air extérieur, le distributeur comparateur présentant une première entrée de commande connectée à la conduite principale et une deuxième entrée de commande connectée à la conduite générale ;

- le système de contrôle pneumatique est propre à comparer automatiquement la pression principale de la conduite principale avec au moins la somme de la pression générale de la conduite générale et du rappel élastique ;
- le système de contrôle pneumatique de la pression principale comprend une branche générale ayant une entrée connectée pneumatiquement à la conduite générale et une sortie directement raccordée à l'entrée d'alimentation pneumatique du distributeur comparateur, le système de contrôle pneumatique de la pression principale comprenant aussi un réducteur de débit disposé sur ladite branche générale et interposé entre la deuxième entrée de commande du distributeur comparateur et la conduite générale de freinage, le réducteur de débit étant par exemple non réglable ;
- le système de contrôle pneumatique de la pression principale comprend au moins un distributeur d'évacuation, le distributeur d'évacuation étant un distributeur pneumatique à commande pneumatique avec rappel élastique, le distributeur d'évacuation présentant au moins une entrée d'alimentation pneumatique connectée à la conduite générale et au moins une sortie d'échappement pneumatique raccordée à l'air extérieur, le distributeur d'évacuation présentant une première entrée de commande connectée à la conduite générale et une deuxième entrée de commande connectée à un point de piquage sur ladite branche générale ;
- le système de contrôle pneumatique de la pression principale comprend un robinet d'isolement interposé entre la deuxième entrée de commande du distributeur comparateur et la conduite générale de freinage, le robinet d'isolement étant actionnable manuellement entre une configuration d'autorisation de passage d'air et une configuration d'interdiction de passage d'air ;
- le système de distribution comprend une valve de distribution et une valve-relai, la valve de distribution étant propre à commander la valve-relai pour autoriser automatiquement l'alimentation en pression du ou de chaque frein pneumatique depuis le réservoir de freinage, en fonction de la pression générale de la conduite générale ;
- le système de distribution est propre à autoriser automatiquement l'alimentation en pression du ou de chaque frein pneumatique depuis le réservoir de freinage lorsque la pression générale de la conduite générale de freinage passe en dessous d'un seuil général de pression ;
- le système de contrôle pneumatique est amovible par rapport à la conduite générale et à la conduite principale ; et
- le véhicule comprend aussi au moins un consommateur pneumatique non-dédié au freinage et connecté à la conduite principale, le consommateur pneumatique étant propre à présenter une configuration de fonctionnement, au cours de laquelle le consommateur pneumatique consomme de l'air comprimé pour mettre en oeuvre une fonction hors-freinage.

De plus, l'invention concerne aussi une méthode de remorquage d'un véhicule ferroviaire remorqué par un autre véhicule ferroviaire remorqueur,
le véhicule ferroviaire remorqué étant tel que décrit ci-dessus, le véhicule remorqué étant dans un état de défaillance, dans lequel au moins l'unité de production d'air comprimé est incapable d'alimenter en air comprimé la conduite principale du véhicule remorqué,
le véhicule remorqueur comprenant au moins une conduite principale et une conduite générale de freinage,
la méthode comprenant les étapes suivantes :
   - connexion des conduites principales respectives des véhicules ferroviaires remorqué et remorqueur ;
   - connexion des conduites générales de freinage respectives des véhicules ferroviaires remorqué et remorqueur ;
   - remorquage du véhicule remorqué par le véhicule remorqueur, l'étape de remorquage comprenant au moins le contrôle de la pression principale de la conduite principale du véhicule remorqué par ledit système de contrôle pneumatique.

L'invention sera mieux comprise à la lecture de la description qui va suivre, donnée uniquement à titre d'exemple, et faite en se référant au dessin annexé, sur lequel :

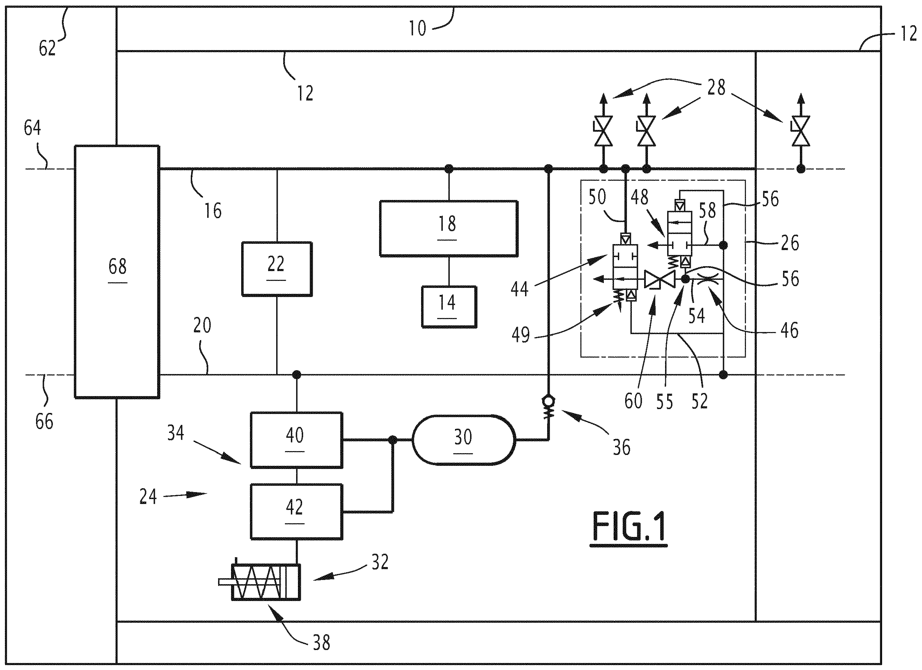

- la figure 1 est un organigramme schématique d'un véhicule selon un exemple de réalisation de l'invention.

Un exemple de véhicule ferroviaire 10 est illustré sur la figure 1.

Le véhicule 10 comprend au moins une voiture 12, par exemple une pluralité de voitures 12. La figure 1 illustre par exemple au moins deux voitures 12.

Le véhicule 10 comprend un système de traction non illustré propre à générer l'énergie mécanique nécessaire pour assurer le déplacement du véhicule 10.

Le véhicule 10 comprend un système d'alimentation électrique 14, une conduite principale 16 d'air comprimé, une unité de production d'air comprimé 18, une conduite générale 20 de freinage d'air comprimé, un système de contrôle de pression générale 22, et au moins un système de commande du freinage 24 du véhicule 10.

Le véhicule 10 comprend une pluralité de systèmes de commande du freinage 24, chaque voiture 12 comprenant au moins un des systèmes de commande du freinage 24.

Le véhicule 10 comprend aussi un système de contrôle pneumatique 26 de la pression principale de la conduite principale 16.

Le véhicule 10 comprend aussi par exemple un système de contrôle et de gestion TCMS (en anglais « Train Control and management System ») non illustré propre à surveiller activement l'état des fonctions de freinage du véhicule 10.

Chaque voiture 12 comprend au moins un bogie non illustré.

Chaque bogie porte au moins un essieu, chaque essieu comprend deux roues et un axe transversal.

Le système de traction du véhicule ferroviaire 10 est propre à mettre en rotation chaque essieu pour faire avancer le véhicule 10.

Au moins une des voitures 12 comprend au moins un consommateur pneumatique 28 non-dédié au freinage et connecté à la conduite principale 16.

Chaque consommateur pneumatique 28 non-dédié au freinage est propre à présenter une configuration de fonctionnement, au cours de laquelle le consommateur pneumatique 28 consomme de l'air comprimé pour mettre en oeuvre une fonction hors-freinage.

Le système d'alimentation électrique 14 est propre à fournir une alimentation électrique.

Le système d'alimentation électrique 14 est connu de l'homme du métier et ne sera pas décrit plus en détails par la suite.

L'alimentation électrique fournie est notamment utilisée par les différents consommateurs 28 du véhicule 10.

L'unité de production d'air 18 est par exemple située dans la ou une des voitures 12 du véhicule ferroviaire 10.

L'unité de production d'air 18 est propre à générer de l'air comprimé à partir d'une alimentation électrique fournie par le système d'alimentation électrique 14.

L'unité de production 18 est propre à alimenter en air comprimé la conduite principale 16.

Pour cela, l'unité de production d'air 18 comprend au moins un compresseur non illustré.

Le ou chaque compresseur est propre à prendre de l'air à l'extérieur au véhicule 10 et à le transmettre à la conduite principale 16, de manière connue.

La conduite principale 16 d'air comprimé présente une pression principale.

Dans une situation nominale du véhicule ferroviaire 10, la pression principale nominale est par exemple comprise entre 7 bar et 10 bar.

Comme indiqué ci-dessus, la pression principale est fournie par l'unité de production d'air 18.

La conduite principale 16 est destinée à alimenter chaque consommateur pneumatique 28 non-dédié au freinage, ainsi que certains éléments du système de commande du freinage 24 comme décrit par la suite.

La conduite principale 16 s'étend par exemple sur la longueur du véhicule ferroviaire 10. On entend en particulier que la conduite principale 16 s'étend sur toutes les voitures 12 du véhicule 10.

La conduite générale de freinage 20 comprend par exemple une section par voiture 12 du véhicule 10.

Deux sections de deux voitures 12 adjacentes sont par exemple reliées de manière pneumatique par des flexibles. Les flexibles peuvent être découplés pour permettre la séparation des voitures 12.

Le système de contrôle de pression générale 22 est propre à alimenter en air comprimé la conduite générale de freinage 20, en particulier à partir de l'air comprimé de la conduite principale 16.

Le système de contrôle de pression générale 22 est propre à réguler l'alimentation en air comprimé de la conduite générale de freinage 20, par exemple par l'intermédiaire d'un organe de contrôle non illustré.

La conduite générale de freinage 20 est distincte de la conduite principale 16.

La conduite générale de freinage 20 est propre à transmettre une consigne de freinage du conducteur sur l'ensemble du véhicule ferroviaire 10.

Pour cela, la conduite générale de freinage 20 s'étend sur la longueur du véhicule ferroviaire 10.

On entend en particulier que la conduite générale de freinage 20 s'étend sur toutes les voitures 12 du véhicule 10. La conduite générale 20 parcourt ainsi le véhicule 10 de bout en bout.

La conduite générale de freinage 20 comprend par exemple une section par voiture 12 du véhicule 10.

Deux sections de deux voitures 12 adjacentes sont par exemple reliées de manière pneumatique par des flexibles. Les flexibles peuvent être découplés pour permettre la séparation des voitures 12.

De plus, la conduite générale de de freinage 20 présente une pression dite générale et est alimentée, via ledit organe de contrôle non illustré, par le système de contrôle de pression générale 22.

L'organe de contrôle est actionnable par le conducteur.

L'organe de contrôle est par exemple un robinet de mécanicien. D'autres organes de contrôle sont connus de l'homme du métier et ne seront pas décrits ici.

L'organe de contrôle est propre à faire varier la pression générale dans la conduite générale 20 de 0 bar à une pression générale maximale prédéterminée.

La pression générale maximale prédéterminée est par exemple supérieure ou égale à 4 bar, par exemple égale à 5 bar.

La conduite générale de freinage 20 est propre à transmettre des variations de pression nécessaires pour commander le freinage.

En particulier, le conducteur du véhicule ferroviaire 10 ajuste son freinage en réglant la pression générale, via l'organe de contrôle.

Chaque système de commande du freinage 24 du véhicule ferroviaire 10 est propre à déclencher automatiquement le freinage en fonction de la pression générale de la conduite générale 20.

Pour ce faire, chaque système de commande du freinage 24 comprend, de manière connue, un réservoir de freinage 30 d'air comprimé, au moins un frein pneumatique 32 et un système de distribution 34.

Le réservoir de freinage 30 est alimenté en air comprimé par la conduite principale 16, de préférence par l'intermédiaire d'un clapet anti-retour 36.

Chaque frein pneumatique 32 est propre à être alimenté par une pression de freinage fournie par le réservoir de freinage 30, et est propre à exercer une force de freinage du véhicule 10 en fonction de la pression de freinage alimentée.

La force de freinage exercée dépend de ladite pression de freinage alimentée.

Chaque frein pneumatique 32 comprend un cylindre de frein 38.

Chaque cylindre de frein 38 comprend par exemple un piston connecté à une plaquette de frein. La plaquette de frein est propre à entrer en contact avec un élément d'une des roues de la voiture 12 pour freiner le véhicule 10.

Le piston se déplace en fonction du changement de pression d'air dans le cylindre de frein 38, c'est-à-dire en fonction de ladite pression de freinage alimentée.

D'autres freins pneumatiques 32 sont bien connus de l'homme du métier et ne seront pas décrits plus en détails ici.

Le système de distribution 34 est propre à autoriser automatiquement l'alimentation en pression du ou de chaque frein pneumatique 32 depuis le réservoir de freinage 30, en fonction de la pression générale de la conduite générale 20.

Un tel système de distribution 34 est connu de l'homme du métier.

Dans l'exemple de la figure 1, le système de distribution 34 comprend au moins une valve de distribution 40 et une valve-relai 42.

La valve de distribution 40 est alors propre à commander la valve-relai 42 pour autoriser automatiquement l'alimentation en pression du ou de chaque frein pneumatique 32 depuis le réservoir de freinage 30, en fonction de la pression générale de la conduite générale 20.

Ladite alimentation est par exemple autorisée automatiquement lorsque la pression générale de la conduite générale de freinage 20 passe en dessous d'un seuil général de pression.

Le système de commande du freinage 24 est ainsi propre à commander le freinage selon une loi de commande de freinage inversée : une augmentation de la pression générale diminue le freinage et une diminution augmente le freinage.

Par exemple, en temps normal, lorsque les freins sont desserrés, la conduite générale de freinage 20 est alimentée à une pression de 5 bars. Quand la pression générale dans la conduite générale 20 baisse de plus de 1,5 bar, les freins sont serrés et exercent la force de freinage.

Une diminution de pression générale dans la conduite générale de freinage 20 est par exemple provoquée par une commande de freinage du conducteur, une commande d'urgence par un des passagers du véhicule 10 au moyen d'un système d'urgence à destination des passagers, ou encore une rupture de la conduite générale 20.

Ainsi, une perte d'air dans la conduite générale de freinage 20, non compensée par le système de contrôle de pression générale 22, provoquera automatiquement l'activation du freinage par l'ensemble des freins 32.

En d'autres termes, le freinage est automatique dans la mesure où c'est absence d'énergie dans sa commande (qu'elle soit électrique ou pneumatique) qui produit le résultat le plus conservateur, à savoir l'application du freinage.

Le freinage est de préférence aussi continu. En effet, la conduite générale de freinage 20 commande dans cet exemple préféré tous les ensembles de frein (distributeur, cylindre de frein) présents sur chaque voiture 12 du véhicule 10.

Pour éviter que le véhicule 10 se retrouve dans une situation d'incapacité à freiner, notamment au cours d'une opération de secours, le véhicule 10 comprend ledit système de contrôle pneumatique 26 de la pression principale de la conduite principale 16 qui va maintenant être décrit.

Le système de contrôle pneumatique 26 est propre à comparer automatiquement la pression principale de la conduite principale 16 avec au moins la pression générale de la conduite générale 20.

De préférence, il s'agit de la comparaison de la pression principale de la conduite principale 16 avec au moins la somme de la pression générale de la conduite générale 20 et du rappel élastique 49 décrit plus en détail par la suite.

Plus précisément, il s'agit de la pression exercée par le rappel élastique 49.

Le système de contrôle pneumatique 26 est propre à évacuer automatiquement l'air comprimé de la conduite générale 20 hors de la conduite générale 20, lorsque la pression principale de la conduite principale 16 passe en-dessous d'un seuil principal de pression d'urgence.

Avantageusement, le système de contrôle pneumatique 26 est amovible par rapport à la conduite générale 20 et à la conduite principale 16. Il est ainsi propre à être connecté auxdites conduites 16, 20 en cas de besoin seulement.

En outre, le véhicule 10 ne nécessite qu'un seul système de contrôle pneumatique 26 tel que décrit.

Un mode de réalisation du système de contrôle pneumatique 26 de la pression principale va maintenant être décrit en référence à la figure 1.

Le système de contrôle pneumatique 26 de la pression principale comprend de préférence au moins un distributeur comparateur 44.

Le système de contrôle pneumatique 26 comprend aussi par exemple un réducteur de débit 46 et un distributeur d'évacuation 48.

Le distributeur comparateur 44 est un distributeur pneumatique à commande pneumatique avec rappel élastique 49.

Le rappel élastique 49 est appliqué par un ressort. Le ressort est de préférence réglable.

Le rappel élastique 49 entre dans la commande de la position du distributeur comparateur 44.

Comme illustré sur la figure 1, le distributeur comparateur 44 présente au moins une entrée d'alimentation pneumatique connectée à la conduite générale 20 et au moins une sortie d'échappement pneumatique raccordée à l'air extérieur.

Le distributeur comparateur 44 présente aussi une première entrée de commande connectée à la conduite principale 16 et une deuxième entrée de commande connectée à la conduite générale 20.

Pour ce faire, le système de contrôle pneumatique 26 comprend une branche principale 50 ayant une entrée directement raccordée à la conduite principale 16 et une sortie directement raccordée à la première entrée de commande du distributeur comparateur 44.

De plus, le système de contrôle pneumatique 26 comprend une première branche générale 52 ayant une entrée connectée pneumatiquement à la conduite générale 20 et une sortie directement raccordée à la deuxième entrée de commande du distributeur comparateur 44.

En outre, le système de contrôle pneumatique 26 comprend une deuxième branche générale 54 ayant une entrée connectée pneumatiquement à la conduite générale 20 et une sortie directement raccordée à l'entrée d'alimentation pneumatique du distributeur comparateur 44.

Le distributeur comparateur 44 présente au moins une position ouverte, dans laquelle l'entrée d'alimentation pneumatique est mise en communication fluidique avec la sortie d'échappement pneumatique, et une position fermée, dans laquelle l'entrée d'alimentation pneumatique ne communique pas avec la sortie d'échappement pneumatique.

Sur la figure 1, le distributeur comparateur 44 est illustré dans la position ouverte.

Le distributeur comparateur 44 est par exemple un distributeur 2/2.

Le rappel élastique 49 du distributeur comparateur 44 est déterminé pour que, lorsque la pression principale de la conduite principale 16 passe en-dessous d'un seuil principal de pression d'urgence, le distributeur comparateur 44 passe en position ouverte.

Le seuil principal de pression d'urgence est supérieur ou égal à la pression minimale pour mettre en oeuvre un freinage par l'ensemble des freins pneumatiques 32 du véhicule 10.

Le réducteur de débit 46 est ici interposé entre la deuxième entrée de commande du distributeur comparateur 44 et la conduite générale de freinage 20.

Plus précisément, le réducteur de débit 46 est disposé sur ladite deuxième branche générale 54 (i.e. la branche ayant sa sortie raccordée à l'entrée d'alimentation pneumatique du distributeur comparateur 44).

Le réducteur de débit 46 est par exemple non réglable.

Le réducteur de débit 46 est configuré pour découpler les niveaux de pression entre la branche 54 et la branche 56 lors de l'ouverture du distributeur comparateur 44.

Ainsi, lorsque le distributeur comparateur 44 est en position ouverte, l'échappement par la sortie du distributeur comparateur 44 présente un débit prédéterminé suffisant pour annuler la compensation du débit de remplissage de la branche 54 traversant le réducteur de débit 46.

Le distributeur d'évacuation 48 est un distributeur pneumatique à commande pneumatique avec rappel élastique.

Comme illustré sur la figure 1, le distributeur d'évacuation 48 présente au moins une entrée d'alimentation pneumatique connectée à la conduite générale 20 et au moins une sortie d'échappement pneumatique raccordée à l'air extérieur.

Le distributeur d'évacuation 48 présente aussi une première entrée de commande connectée à la conduite générale 20 et une deuxième entrée de commande connectée à un point de piquage 55 sur ladite deuxième branche générale 54.

Le point de piquage 55 est par exemple interposé entre le réducteur de débit 46 et l'entrée d'alimentation pneumatique du distributeur comparateur 44.

De plus, plus précisément, le système de contrôle pneumatique 26 comprend une troisième branche générale 56 ayant une entrée connectée pneumatiquement à la conduite générale 20 et une sortie directement raccordée à la première entrée de commande du distributeur d'évacuation 48.

En outre, le système de contrôle pneumatique 26 comprend une quatrième branche générale 58 ayant une entrée connectée pneumatiquement à la conduite générale 20 et une sortie directement raccordée à l'entrée d'alimentation pneumatique du distributeur d'évacuation 48.

Le distributeur d'évacuation 48 présente au moins une position ouverte, dans laquelle l'entrée d'alimentation pneumatique est mise en communication fluidique avec la sortie d'échappement pneumatique du distributeur d'évacuation 48, et une position fermée, dans laquelle l'entrée d'alimentation pneumatique ne communique pas avec la sortie d'échappement pneumatique.

Sur la figure 1, le distributeur d'évacuation 48 est illustré dans la position fermée.

Le distributeur d'évacuation 48 est par exemple un distributeur 2/2.

Comme illustré sur la figure 1, les troisième et quatrième branches générales se raccordent à un point de piquage en amont du réducteur de débit 46.

En d'autres termes, l'écoulement dans les troisième et quatrième branches générales n'est pas influencé par le réducteur de débit 46.

Ainsi, lorsque le distributeur d'évacuation 48 est en position ouverte dans laquelle l'entrée d'alimentation pneumatique est mise en communication fluidique avec la sortie d'échappement pneumatique, l'échappement présente un débit prédéterminé supérieur au débit prédéterminé du distributeur comparateur 44 ouvert.

Ledit débit prédéterminé du distributeur d'évacuation 48 est par exemple supérieur au débit de compensation des fuites de la conduite générale 20 du système de contrôle de pression générale 22.

Le rappel élastique du distributeur d'évacuation 48 est déterminé pour que, lorsque les pressions des première et deuxième entrées de commande sont égales, le distributeur d'évacuation 48 est en position fermée.

Le rappel élastique du distributeur d'évacuation 48 est déterminé pour que, lorsque la pression de la première entrée de commande du distributeur 48 est supérieure à la pression de la deuxième entrée de commande du distributeur 48, le distributeur d'évacuation 48 est en position ouverte.

En vue de ce qui précède, on comprend que, lorsque la pression principale de la conduite principale 16 passe en-dessous du seuil principal de pression d'urgence, le distributeur comparateur 44 passe en position ouverte. Par l'intermédiaire du réducteur de débit 46, un déséquilibre se crée entre les pressions des première et deuxième entrées de commande du distributeur d'évacuation 48 qui fait passer le distributeur d'évacuation 48 en position ouverte. La conduite générale 20 est alors mise en communication fluidique avec l'air extérieur et se vide.

Avec deux distributeurs 44, 48 différents, on découple ainsi la régulation.

De préférence, le système de contrôle pneumatique 26 de la pression principale comprend un robinet d'isolement 60.

Le robinet d'isolement 60 est interposé entre la deuxième entrée de commande du distributeur comparateur 44 et la conduite générale de freinage 20.

Le robinet d'isolement 60 est actionnable manuellement entre une configuration d'autorisation de passage d'air et une configuration d'interdiction de passage d'air.

Le robinet d'isolement 60 permet de ne pas utiliser le système de contrôle 26, par exemple dans le cas où il n'est pas nécessaire de s'en servir dans une situation nominale.

En variante, le système de contrôle est dépourvu d'un tel robinet d'isolement 60.

Une méthode de remorquage d'un véhicule ferroviaire 10 remorqué par un autre véhicule ferroviaire remorqueur 62 va maintenant être décrite, le véhicule remorqué 10 correspondant au véhicule 10 décrit ci-dessus.

La méthode est par exemple mise en oeuvre pour une opération de secours du véhicule remorqué 10.

Au cours de la méthode, le véhicule remorqué 10 est par exemple dans un état de défaillance.

Dans l'état de défaillance, au moins l'unité de production d'air 18 comprimé du véhicule remorqué 10 est incapable d'alimenter en air comprimé la conduite principale 16 du véhicule remorqué 10. Par exemple, le système d'alimentation électrique 14 du véhicule remorqué 10 est en panne, et est incapable de fournir une alimentation électrique à l'unité de production d'air comprimé 18.

De plus, dans l'état de défaillance, il n'y a par exemple aucune surveillance active des fonctions de freinage du véhicule remorqué 10. Par exemple, le système de contrôle et de gestion TCMS est défaillant.

En outre, dans l'état de défaillance, le système de traction du véhicule remorqué 10 est par exemple incapable d'assurer le déplacement du véhicule 10. Par exemple, le système de traction du véhicule remorqué 10 est incapable de mettre en rotation les essieux pour faire avancer le véhicule 10.

Dans l'état de défaillance, le véhicule remorqué 10 nécessite le véhicule remorqueur 62 pour se déplacer. En d'autres termes, l'ensemble du véhicule remorqué 10 et du véhicule remorqueur 62 est déplacé uniquement par le système de traction du véhicule remorqueur 62.

Le véhicule remorqueur 62 comprend au moins un système d'alimentation électrique, une conduite principale 64 d'air comprimé, une unité de production d'air comprimé, une conduite générale 66 de freinage d'air comprimé, un système de contrôle de pression générale et un système de commande du freinage du véhicule remorqueur 62.

Ces éléments du véhicule remorqueur 62 présentent des caractéristiques similaires à celles décrites ci-dessus pour le véhicule remorqueur 62, et ne seront pas décrits de nouveau.

La méthode comprend une étape de connexion des conduites principales respectives 16, 64 des véhicules ferroviaires remorqué 10 et remorqueur 62, et une étape de connexion des conduites générales de freinage respectives 20, 66 des véhicules ferroviaires remorqué 10 et remorqueur 62.

Ces connexions sont par exemple mises en oeuvre au moyen d'une interface dédiée 68 connue.

La conduite principale 16 du véhicule remorqué 10 est alors alimentée en pression principale par la conduite principale 64 du véhicule remorqueur 62.

De même, la conduite générale de freinage 20 du véhicule remorqué 10 est ainsi alimentée en pression générale par la conduite générale 66 du véhicule remorqueur 62.

Dans le cas où le système de contrôle pneumatique 26 décrit ci-dessus est amovible, la méthode comprend une étape de connexion du système de contrôle pneumatique 26 à la conduite générale 20 et à la conduite principale 16 du véhicule remorqué 10, le système 26 étant préalablement à l'écart desdites conduites 16, 20.

Par la suite, la méthode comprend une étape de remorquage du véhicule remorqué 10 par le véhicule remorqueur 62.

L'étape de remorquage comprend le déplacement de l'ensemble du véhicule remorqué 10 et du véhicule remorqueur 62 par le système de traction du véhicule remorqueur 62.

En d'autres termes, le véhicule remorqué 10 est poussé par le véhicule remorqueur 62.

L'étape de remorquage comprend aussi le contrôle de la pression principale de la conduite principale 16 du véhicule remorqué 10 par le système de contrôle pneumatique 26.

Ce contrôle est mis en oeuvre au moins au cours dudit déplacement de l'ensemble du véhicule remorqué 10 et du véhicule remorqueur 62.

Lors du contrôle, le système de contrôle pneumatique 26 compare automatiquement la pression principale de la conduite principale 16 avec au moins la pression générale de la conduite générale 20.

De préférence, il s'agit de la comparaison de la pression principale de la conduite principale 16 avec au moins la somme de la pression générale de la conduite générale 20 et du rappel élastique 49.

Lorsque la pression principale de la conduite principale 16 passe en-dessous du seuil principal de pression d'urgence, le système de contrôle pneumatique 26 évacue automatiquement l'air comprimé de la conduite générale 20 hors de la conduite générale 20.

Le freinage du véhicule remorqué 10 est ainsi provoqué automatiquement par le système de commande du freinage 24 du véhicule remorqué 10.

De manière indépendante, le véhicule remorqueur 62 est aussi freiné par la réaction de son système de commande de freinage qui réagit au changement de pression de la conduite générale 66 connectée et continue à la conduite générale 20 du véhicule remorqué 10.

Grâce aux caractéristiques de l'invention, une action automatique de freinage d'urgence via la conduite générale de freinage 20 est mise en oeuvre quand la pression de la conduite principale 16 devient trop faible, c'est-à-dire en deçà duquel on perd la capacité d'appliquer au moins un freinage d'urgence par le véhicule remorqué 10.

L'invention reste simple dans la mesure où il n'est pas nécessaire de la développer sur chaque réservoir de freinage 30, comme dans le cas de la première solution.

L'invention donne aussi plus de liberté dans son utilisation, dans la mesure où le système de contrôle pneumatique 26 peut être envisagé en tant que dispositif mobile et amovible, à n'installer que lors d'une opération de secours.

L'invention est aussi conforme aux normes EN 14198 et EN 16185-1, imposant pour contrainte que l'air comprimé des réservoirs du système de freinage et de la conduite générale de freinage 20 ne soit utilisé pour aucun autre but que le freinage. En effet, ces normes ne requièrent pas que l'air comprimé de la conduite générale de freinage 20 et de chaque réservoir de freinage 30 sert exclusivement à fournir de la puissance aux actuateurs de freinage. En accord avec lesdites normes, la solution de l'invention utilise l'air de la conduite générale de freinage 20 pour déclencher un freinage d'urgence sous un seuil de pression dans la conduite principale 16. Le but de l'air comprimé utilisé dans cette solution est donc exclusivement lié au freinage.

## Revendications

1. Véhicule ferroviaire (10) comprenant :
- un système d'alimentation électrique (14) ;
- une conduite principale (16) d'air comprimé présentant une pression principale ;
- une unité de production d'air comprimé (18), propre à générer de l'air comprimé à partir d'une alimentation électrique fournie par le système d'alimentation électrique (14), l'unité de production étant propre à alimenter en air comprimé la conduite principale (16) ;
- une conduite générale (20) de freinage d'air comprimé présentant une pression générale ;
- un système de contrôle de pression générale (22) propre à alimenter en air comprimé la conduite générale (20) à partir de l'air comprimé de la conduite principale (16) ;
- au moins un système de commande du freinage (24) du véhicule ferroviaire (10) propre à déclencher automatiquement le freinage en fonction de la pression générale de la conduite générale (20), le système de commande du freinage (24) comprenant :
* un réservoir de freinage (30) d'air comprimé, le réservoir de freinage (30) étant alimenté en air comprimé par la conduite principale (16),
* un frein pneumatique (32), le frein pneumatique (32) étant propre à être alimenté par une pression de freinage fournie par le réservoir de freinage (30), et propre à exercer une force de freinage du véhicule (10) en fonction de la pression de freinage alimentée ;
* un système de distribution (34) propre à autoriser automatiquement l'alimentation en pression du ou de chaque frein pneumatique (32) depuis le réservoir de freinage (30), en fonction de la pression générale de la conduite générale (20) ;
**caractérisé en ce que** le véhicule ferroviaire (10) comprend en outre un système de contrôle pneumatique (26) de la pression principale de la conduite principale (16), le système de contrôle pneumatique (26) étant propre à comparer automatiquement la pression principale de la conduite principale (16) avec au moins la pression générale de la conduite générale (20), et étant propre à évacuer automatiquement l'air comprimé de la conduite générale (20) hors de la conduite générale (20), lorsque la pression principale de la conduite principale (16) passe en-dessous d'un seuil principal de pression d'urgence.

2. Véhicule ferroviaire (10) selon la revendication 1, dans lequel le véhicule (10) comprend une pluralité de systèmes de commande du freinage (24) et le seuil principal de pression d'urgence est supérieur ou égal à la pression minimale pour mettre en oeuvre un freinage par l'ensemble des freins pneumatiques (32) du véhicule (10).

3. Véhicule ferroviaire (10) selon l'une quelconque des revendications 1 ou 2, dans lequel le système de contrôle pneumatique (26) de la pression principale comprend au moins un distributeur comparateur (44), le distributeur comparateur (44) étant un distributeur pneumatique à commande pneumatique avec rappel élastique (49), le distributeur comparateur (44) présentant au moins une entrée d'alimentation pneumatique connectée à la conduite générale (20) et au moins une sortie d'échappement pneumatique raccordée à l'air extérieur, le distributeur comparateur (44) présentant une première entrée de commande connectée à la conduite principale (16) et une deuxième entrée de commande connectée à la conduite générale (20) ; le système de contrôle pneumatique (26) étant de préférence propre à comparer automatiquement la pression principale de la conduite principale (16) avec au moins la somme de la pression générale de la conduite générale (20) et du rappel élastique (49).

4. Véhicule ferroviaire (10) selon la revendication 3, dans lequel le système de contrôle pneumatique (26) de la pression principale comprend une branche générale (54) ayant une entrée connectée pneumatiquement à la conduite générale (20) et une sortie directement raccordée à l'entrée d'alimentation pneumatique du distributeur comparateur (44), le système de contrôle pneumatique (26) de la pression principale comprenant aussi un réducteur de débit (46) disposé sur ladite branche générale (54) et interposé entre la deuxième entrée de commande du distributeur comparateur (44) et la conduite générale de freinage (20), le réducteur de débit (46) étant par exemple non réglable.

5. Véhicule ferroviaire (10) selon la revendication 4, dans lequel le système de contrôle pneumatique (26) de la pression principale comprend au moins un distributeur d'évacuation (48), le distributeur d'évacuation (48) étant un distributeur pneumatique à commande pneumatique avec rappel élastique, le distributeur d'évacuation (48) présentant au moins une entrée d'alimentation pneumatique connectée à la conduite générale (20) et au moins une sortie d'échappement pneumatique raccordée à l'air extérieur, le distributeur d'évacuation (48) présentant une première entrée de commande connectée à la conduite générale (20) et une deuxième entrée de commande connectée à un point de piquage (55) sur ladite branche générale (54).

6. Véhicule ferroviaire (10) selon l'une quelconque des revendications 3 à 5, dans lequel le système de contrôle pneumatique (26) de la pression principale comprend un robinet d'isolement (60) interposé entre la deuxième entrée de commande du distributeur comparateur (44) et la conduite générale de freinage (20), le robinet d'isolement (60) étant actionnable manuellement entre une configuration d'autorisation de passage d'air et une configuration d'interdiction de passage d'air.

7. Véhicule ferroviaire (10) selon l'une quelconque des revendications précédentes, dans lequel le système de distribution (34) comprend une valve de distribution (40) et une valve-relai (42), la valve de distribution (40) étant propre à commander la valve-relai (42) pour autoriser automatiquement l'alimentation en pression du ou de chaque frein pneumatique (32) depuis le réservoir de freinage (30), en fonction de la pression générale de la conduite générale (20).

8. Véhicule ferroviaire (10) selon l'une quelconque des revendications précédentes, dans lequel le système de distribution (34) est propre à autoriser automatiquement l'alimentation en pression du ou de chaque frein pneumatique (32) depuis le réservoir de freinage (30) lorsque la pression générale de la conduite générale de freinage (20) passe en dessous d'un seuil général de pression.

9. Véhicule ferroviaire (10) selon l'une quelconque des revendications précédentes, dans lequel le système de contrôle pneumatique (26) est amovible par rapport à la conduite générale (20) et à la conduite principale (16).

10. Méthode de remorquage d'un véhicule ferroviaire (10) remorqué par un autre véhicule ferroviaire remorqueur (62),
le véhicule ferroviaire remorqué (10) étant selon l'une quelconque des revendications précédentes, le véhicule remorqué (10) étant dans un état de défaillance, dans lequel au moins l'unité de production d'air comprimé (18) est incapable d'alimenter en air comprimé la conduite principale (16) du véhicule remorqué (10),
le véhicule remorqueur (62) comprenant au moins une conduite principale (64) et une conduite générale de freinage (66),
la méthode comprenant les étapes suivantes :
- connexion des conduites principales respectives (16, 64) des véhicules ferroviaires remorqué (10) et remorqueur (62) ;
- connexion des conduites générales de freinage respectives (20, 66) des véhicules ferroviaires remorqué (10) et remorqueur (62) ;
- remorquage du véhicule remorqué (10) par le véhicule remorqueur (62), **caractérisé en ce que** l'étape de remorquage comprenant au moins le contrôle de la pression principale de la conduite principale (16) du véhicule remorqué (10) par ledit système de contrôle pneumatique (26).

## Patentansprüche

1. Schienenfahrzeug (10), umfassend:
- ein Stromversorgungssystem (14);
- eine Hauptleitung (16) für Druckluft mit einem Hauptdruck;
- eine Drucklufterzeugungseinheit (18), die dazu geeignet ist, Druckluft aus einer elektrischen Versorgung zu erzeugen, die vom Stromversorgungssystem (14) geliefert wird; und die Drucklufterzeugungseinheit ist dazu geeignet, die Hauptleitung (16) mit Druckluft zu versorgen;
- eine allgemeine Druckluftbremsleitung (20) mit einem allgemeinen Druck;
- ein allgemeines Druckkontrollsystem (22), das dazu geeignet ist, die allgemeine Leitung (20) mit Druckluft aus der Hauptleitung (16) zu versorgen;
- mindestens ein Bremssteuersystem (24) des Schienenfahrzeugs (10), das geeignet ist, die Bremsung automatisch in Abhängigkeit vom allgemeinen Druck der allgemeinen Leitung (20) auszulösen, wobei das Bremssteuersystem (24) umfasst:
* einen Bremsbehälter (30) für Druckluft, wobei der Bremsbehälter (30) durch die Hauptleitung (16) mit Druckluft versorgt wird,
* eine pneumatische Bremse (32), wobei die pneumatische Bremse (32) geeignet ist, mit einem Bremsdruck versorgt zu werden, der von dem Bremsbehälter (30) geliefert wird, und geeignet ist, eine Bremskraft des Fahrzeugs (10) in Abhängigkeit von dem versorgten Bremsdruck auszuüben;
* ein Verteilersystem (34), das geeignet ist, die Druckversorgung der oder jeder pneumatischen Bremse (32) aus dem Bremsbehälter (30) in Abhängigkeit vom allgemeinen Druck in der allgemeinen Leitung (20) automatisch zuzulassen;
**dadurch gekennzeichnet, dass** das Schienenfahrzeug (10) ferner ein pneumatisches Steuersystem (26) für den Hauptdruck der Hauptleitung (16) umfasst, wobei das pneumatische Steuersystem (26) dazu geeignet ist, den Hauptdruck der Hauptleitung (16) automatisch mit mindestens dem allgemeinen Druck der allgemeinen Leitung (20) zu vergleichen, und geeignet ist, automatisch Druckluft aus der allgemeinen Leitung (20) abzulassen, wenn der Hauptdruck der Hauptleitung (16) unter einen Hauptnotdruckschwellenwert fällt.

2. Schienenfahrzeug (10) nach Anspruch 1, wobei das Fahrzeug (10) eine Vielzahl von Bremssteuersystemen (24) umfasst und der Hauptnotdruckschwellenwert größer oder gleich dem Mindestdruck ist, um eine Bremsung durch die Gesamtheit der Druckluftbremsen (32) des Fahrzeugs (10) zu implementieren.

3. Schienenfahrzeug (10) nach einem der Ansprüche 1 oder 2, wobei das pneumatische Hauptdruck-Steuersystem (26) mindestens ein Komparatorventil (44) umfasst, wobei das Komparatorventil (44) ein pneumatisches Ventil mit elastischer Rückstellung (49) ist, wobei das Komparatorventil (44) mindestens einen mit der allgemeinen Leitung (20) verbundenen pneumatischen Versorgungseingang umfasst und mindestens einen mit der Außenluft verbundenen pneumatischen Ablassausgang aufweist. Das Komparatorventil (44) hat einen ersten Steuereingang, der mit der Hauptleitung (16) verbunden ist, und einen zweiten Steuereingang, der mit der allgemeinen Leitung (20) verbunden ist. Das pneumatische Steuersystem (26) ist vorzugsweise dazu geeignet, den Hauptdruck der Hauptleitung (16) automatisch mit mindestens der Summe aus dem allgemeinen Druck der allgemeinen Leitung (20) und der elastischen Rückstellung (49) zu vergleichen.

4. Schienenfahrzeug (10) nach Anspruch 3, wobei das pneumatische Steuersystem (26) für den Hauptdruck einen allgemeinen Zweig (54) mit einem Einlass umfasst, der pneumatisch mit der allgemeinen Bremsleitung (20) verbunden ist, und einen Ausgang, der direkt mit dem pneumatischen Versorgungseingang des Komparatorventils (44) verbunden ist, wobei das pneumatische Steuersystem (26) für den Hauptdruck auch einen Durchflussreduzierer (46) umfasst, der an dem allgemeinen Zweig (54) angeordnet ist und zwischen dem Hauptdruckregler (26) und zwischen dem zweiten Steuereingang des Komparatorventils (44) und der allgemeinen Bremsleitung (20), wobei der Durchflussreduzierer (46) zum Beispiel nicht einstellbar ist.

5. Schienenfahrzeug (10) nach Anspruch 4, wobei das pneumatische Hauptdruck-Steuersystem (26) mindestens ein Ablassventil (48) umfasst, wobei das Ablassventil (48) ein pneumatisch gesteuertes pneumatisches Ventil mit elastischer Rückstellung ist, wobei das Ablassventil (48) mindestens einen pneumatischen Versorgungseingang aufweist, der mit der allgemeinen Leitung (20) verbunden ist, und mindestens einen pneumatischen Auslass, der mit der Außenluft verbunden ist, wobei das Ablassventil (48) einen ersten Steuereingang aufweist, der mit der allgemeinen Leitung (20) verbunden ist, und einen zweiten Steuereingang, der mit einem Abzweigpunkt (55) an dem allgemeinen Zweig (54) verbunden ist.

6. Schienenfahrzeug (10) nach einem der Ansprüche 3 bis 5, wobei das pneumatische Steuersystem (26) für den Hauptdruck ein Absperrventil (60) umfasst, das zwischen dem zweiten Steuereingang des Komparatorventils (44) und der allgemeinen Bremsleitung (20) angeordnet ist, wobei das Absperrventil (60) manuell zwischen einer Konfiguration, in der der Luftdurchgang erlaubt ist, und einer Konfiguration, in der der Luftdurchgang verboten ist, betätigbar ist.

7. Schienenfahrzeug (10) nach einem der vorhergehenden Ansprüche, bei dem das Verteilersystem (34) ein Verteilerventil (40) und ein Relaisventil (42) umfasst, wobei das Verteilerventil (40) dazu geeignet ist das Relaisventil (42) zu steuern, um automatisch die Druckversorgung der oder jeder pneumatischen Bremse (32) aus dem Bremsbehälter (30) in Abhängigkeit vom allgemeinen Druck in der allgemeinen Leitung (20) zuzulassen.

8. Schienenfahrzeug (10) nach einem der vorhergehenden Ansprüche, bei dem das Verteilersystem (34) dazu geeignet ist, automatisch die Druckversorgung der oder jeder pneumatischen Bremse (32) aus dem Bremsbehälter (30) zuzulassen, wenn der allgemeine Druck in der allgemeinen Bremsleitung (20) unter einen allgemeinen Druckschwellenwert abfällt.

9. Schienenfahrzeug (10) nach einem der vorhergehenden Ansprüche, wobei das pneumatische Steuersystem (26) von der allgemeinen Leitung (20) und der Hauptleitung (16) abnehmbar ist.

10. Verfahren zum Abschleppen eines Schienenfahrzeugs (10), das von einem anderen schleppenden Schienenfahrzeug (62) abgeschleppt wird,
wobei das abgeschleppte Schienenfahrzeug (10) nach einem der vorhergehenden Ansprüche das abgeschleppte Fahrzeug (10) in einem defekten Zustand ist, in dem zumindest die Drucklufterzeugungseinheit (18) nicht in der Lage ist, die Hauptleitung (16) des abgeschleppten Fahrzeugs (10) mit Druckluft zu versorgen,
das Abschleppfahrzeug (62) mindestens eine Hauptleitung (64) und eine allgemeine Bremsleitung (66) umfasst,
Wobei das Verfahren die folgenden Schritte umfasst:
- Verbindung der jeweiligen Hauptleitungen (16, 64) der abgeschleppten (10) und abschleppenden (62) Schienenfahrzeuge;
- Verbindung der jeweiligen allgemeinen Bremsleitungen (20, 66) der abgeschleppten (10) und abschleppenden (62) Schienenfahrzeuge;
- Abschleppen des abgeschleppten Fahrzeugs (10) durch das abschleppende Fahrzeug (62), **dadurch gekennzeichnet, dass** der Schritt des Abschleppens mindestens das Überwachen des Hauptdrucks der Hauptleitung (16) des abgeschleppten Fahrzeugs (10) durch das pneumatische Steuersystem (26) umfasst.

## Claims

1. A railway vehicle (10) comprising:
- a power supply system (14);
- a main compressed air line (16) with a main pressure;
- a compressed air production unit (18), suitable for generating compressed air from an electrical supply provided by the power supply system (14), the production unit being suitable for supplying compressed air to the main pipe (16);
- a general compressed air braking pipe (20) with a general pressure;
- a general pressure control system (22) for supplying compressed air to the general pipe (20) from the compressed air in the main pipe (16);
- at least one brake control system (24) for the railway vehicle (10) suitable for automatically triggering braking as a function of brake pipe pressure (20), the brake control system (24) comprising:
* a braking reservoir (30) of compressed air, the braking reservoir (30) being supplied with compressed air by the main pipe (16),
* a pneumatic brake (32), the pneumatic brake (32) being adapted to be supplied with braking pressure from the brake reservoir (30), and adapted to exert a braking force on the vehicle (10) as a function of the supplied braking pressure;
* a distribution system (34) capable of automatically authorising the supply of pressure to the or each pneumatic brake (32) from the brake reservoir (30), as a function of the general pressure of the brake pipe (20);
**characterised in that** the railway vehicle (10) further comprises a pneumatic control system (26) for the main line pressure (16), the pneumatic control system (26) being capable of automatically comparing the main line pressure (16) with at least the general line pressure (20), and being capable of automatically evacuating compressed air from the general line (20) out of the general line (20), when the main line pressure (16) drops below a main emergency pressure threshold.

2. A railway vehicle (10) according to claim 1, wherein the vehicle (10) comprises a plurality of braking control systems (24) and the main emergency pressure threshold is greater than or equal to the minimum pressure for implementing braking by all of the pneumatic brakes (32) of the vehicle (10).

3. A railway vehicle (10) according to either of claims 1 and 2, in which the pneumatic system (26) for monitoring the main pressure comprises at least one comparator distributor (44), the comparator distributor (44) being a pneumatically controlled pneumatic distributor with elastic return (49), the comparator distributor (44) having at least one pneumatic supply inlet connected to the general pipe (20) and at least one pneumatically-operated exhaust outlet connected to the outside air, the comparator distributor (44) having a first control inlet connected to the main pipe (16) and a second control inlet connected to the general pipe (20); the pneumatic control system (26) being preferably capable of automatically comparing the main pressure of the main pipe (16) with at least the sum of the general pressure of the general pipe (20) and of the elastic return (49).

4. A railway vehicle (10) as claimed in claim 3, wherein the pneumatic main pressure control system (26) comprises a general branch (54) having an inlet connected pneumatically to the brake pipe (20) and an outlet connected directly to the pneumatic supply inlet of the comparator valve (44), the pneumatic main pressure control system (26) of the main pressure also comprising a flow reducer (46) arranged on said general branch (54) and interposed between the second control input of the comparator valve (44) and the general brake pipe (20), the flow reducer (46) being non-adjustable, for example.

5. A railway vehicle (10) according to claim 4, in which the pneumatic control system (26) for the main pressure comprises at least one evacuation distributor (48), the evacuation distributor (48) being a pneumatically controlled distributor with elastic return, the evacuation distributor (48) having at least one pneumatic supply inlet connected to the general pipe (20) and at least one pneumatic exhaust outlet connected to the outside air, the evacuation distributor (48) having a first control inlet connected to the general pipe (20) and a second control inlet connected to a stitching point (55) on said general branch (54).

6. A railway vehicle (10) according to any one of claims 3 to 5, wherein the pneumatic main pressure control system (26) comprises a shut-off valve (60) interposed between the second control input of the comparator valve (44) and the general brake pipe (20), the isolation valve (60) being manually operable between an air passage authorisation configuration and an air passage prohibition configuration.

7. A railway vehicle (10) according to any one of the preceding claims, in which the distribution system (34) comprises a distribution valve (40) and a relay valve (42), the distribution valve (40) being suitable for control the relay valve (42) to automatically authorise the supply of pressure to the or each pneumatic brake (32) from the brake reservoir (30), as a function of the general pressure of the brake pipe (20).

8. A railway vehicle (10) according to any one of the preceding claims, in which the distribution system (34) is suitable for automatically authorising the supply of pressure to the or each pneumatic brake (32) from the braking reservoir (30) when the general pressure of the general braking pipe (20) falls below a general pressure threshold.

9. A railway vehicle (10) according to any one of the preceding claims, in which the pneumatic control system (26) is removable with respect to the brake pipe (20) and the main brake pipe (16).

10. A method of towing a rail vehicle (10) towed by another towing rail vehicle (62),
the towed rail vehicle (10) being according to any one of the preceding claims, the towed vehicle (10) being in a faulty state, in which at least the compressed air production unit (18) is unable to supply compressed air to the main line (16) of the towed vehicle (10),
the towing vehicle (62) comprising at least one main line (64) and a general braking line (66),
the method comprising the following steps:
- connection of the respective main lines (16, 64) of the rail vehicles being towed (10) and the towing vehicle (62);
- connection of the respective brake mains (20, 66) of the rail vehicles being towed (10) and the towing vehicle (62);
- towing of the towed vehicle (10) by the towing vehicle (62), **characterised in that** the towing step comprises at least the control of the main pressure of the main line (16) of the towed vehicle (10) by said pneumatic control system (26).
